# EUROPÄISCHE PATENTSCHRIFT

(11) **EP 2 279 981 B1**
(45) Veröffentlichungstag und Bekanntmachung des Hinweises auf die Patenterteilung: **23.05.2012**
(21) Anmeldenummer: 10007449.1
(22) Anmeldetag: 16.07.2010
(51) Int. Cl.: B66F 9/075, B60K 1/04

(54) **Verriegelungsvorrichtung für einen Batterieblock für ein Flurföderzeug**
Locking device for a battery block for an industrial truck
Dispositif de verrouillage pour un bloc de batterie d'un chariot de manutention

(30) Priorität: 30.07.2009 DE 102009035394
(43) Veröffentlichungstag der Anmeldung: 02.02.2011
(73) Patentinhaber: Jungheinrich Aktiengesellschaft, 22047 Hamburg (DE)
(72) Erfinder: Lohmann, Helmut, 27404 Nartum-Gyhum (DE)
(74) Vertreter: Hauck Patent- und Rechtsanwälte

(56) Entgegenhaltungen:
- EP-A2- 2 006 145
- DE-A1-102004 047 339
- DE-A1-102006 057 490
- JP-A- 2003 267 676
- JP-U- 62 153 292

## Beschreibung

Die Erfindung bezieht sich auf eine Verriegelungsvorrichtung für einen Batterieblock für ein Flurförderzeug nach dem Patentanspruch 1.

Eine derartige Verriegelungsvorrichtung ist etwa aus DE 10 2006 057 490 A1 bekannt geworden. Zwei Hebel der Verriegelungsvorrichtung bilden einen Kniehebelverschluss, wobei ein erster Hebel um eine fahrzeugfeste Achse gelagert ist. Der zweite Hebel ist am ersten Hebel schwenkbar gelagert und erfasst eine Wandfläche des Batterieblocks mit Hilfe eines Puffers. In der Entriegelungsposition kann der Batterieblock zu einer Seite horizontal herausbewegt werden.

Bei den bekannten Flurförderzeugen ist die Batterie in der Regel auf Rollensystemen gelagert. Hierbei kann es durch Stöße bei Transportfahrten zu Setzerscheinungen auf den Rollenkontaktflächen kommen, wodurch die aufzuwendende Kraft bei der Entnahme des Batterieblocks recht hoch ist, weil zuerst eine Losbrechkraft überwunden werden muss. Ferner steht die Batterie nach dem Entriegeln noch am Anschlag, daher bleibt einer Hand für die Entnahme nur wenig oder kein Platz die Batterie zu hintergreifen.

Der Erfindung liegt die Aufgabe zugrunde, eine Verriegelungsvorrichtung für einen Batterieblock für ein Flurförderzeug zu schaffen, bei der ein schneller und einfacher Batteriewechsel möglich ist und die Entnahme der Batterie erleichtert ist.

Die Aufgabe wird durch eine Verriegelungsvorrichtung mit den Merkmalen aus Anspruch 1 gelöst. Vorteilhafte Ausgestaltungen bilden den Gegenstand der Unteransprüche.

Die erfindungsgemäße Verriegelungsvorrichtung für einen Batterieblock für ein Flurförderzeug umfasst eine Batterieverriegelung zur lösbaren Verriegelung des Batterieblocks in einem Rahmen des Flurförderzeugs und einen separaten, um eine fahrzeugfeste Achse gelagerten Entnahmehebel zur Unterstützung einer Entnahme des Batterieblocks. Der Entnahmehebel weist einen durch einen ersten Hebelarm gebildeten Griffabschnitt sowie einen durch einen zweiten Hebelarm gebildeten Hebelabschnitt auf. Der Hebelabschnitt schiebt bei der Entnahme den Batterieblock teilweise aus dem Rahmen heraus.

Nach einem Lösen der Batterieverriegelung kann mit Hilfe des Entnahmehebels der Batterieblock teilweise aus dem Rahmen des Flurförderzeugs geschoben werden. Dies erleichtert die Entnahme des Batterieblocks, da durch die Hebelwirkung eine Losbrechkraft leicht aufgebracht werden kann. Weil eine Wandung des Batterieblocks häufig bündig mit dem Fahrzeugrahmen abschließt, ist die Entnahme auch dadurch erleichtert, dass der Batterieblock ein Stück weit aus dem Fahrzeugrahmen herausgeschoben wird und einfacher zu greifen ist. Die separate Anordnung des Entnahmehebels ermöglicht zum einen seine Betätigung unabhängig von einer Betätigung der Batterieverriegelung, zum anderen ist dadurch eine Unabhängigkeit bei Dimensionierung und Materialwahl gegeben. Die erfindungsgemäße Verriegelungsvorrichtung erlaubt die Verwendung unmodifizierter Standardbatterien.

Bevorzugt ist der Entnahmehebel über die Achse mit der Batterieverriegelung verbunden. So kann die Achse an der ohnehin fest angebrachten Batterieverriegelung sicher gelagert werden. Beide Betätigungseinrichtungen, d.h. Batterieverriegelung und Entnahmehebel, sind dadurch nahe beieinander angeordnet, was die Zugänglichkeit und die Bedienung vereinfacht.

Bevorzugt weist die Batterieverriegelung mindestens einen Hebel auf. Hierbei ist die Achse eine Verlängerung einer Achse der Batterieverriegelung, wodurch die Konstruktion vereinfacht wird.

In einer bevorzugten Ausgestaltung weist der Griffabschnitt des Entnahmehebels einen ersten Halteanschlag auf, der in einer Ruheposition des Entnahmehebels die Beweglichkeit des nicht durch die Batterieverriegelung verriegelten Batterieblocks aus dem Rahmen des Flurförderzeugs heraus begrenzt. Dies hat den Vorteil, dass der Batterieblock auch nach einem Lösen der Batterieverriegelung nicht aus dem Fahrzeugrahmen herausrollen kann. Entsprechend kann der Batterieblock auch bei einem Einschieben nicht wieder herausrollen. Ist ein Wechsel der Batterie bei einer geneigten Lage des Flurförderzeugs erforderlich oder hat sich die Batterieverriegelung unbeabsichtigt gelöst, so bleibt der Batterieblock in seiner Beweglichkeit eingeschränkt, solange der Entnahmehebel nicht betätigt wird. Verletzungen oder Beschädigungen können so vermieden werden.

In einer bevorzugten Ausgestaltung weist der Griffabschnitt des Entnahmehebels einen zweiten Halteanschlag auf, der in einer Ruheposition des Entnahmehebels den Einschub des Batterieblocks in den Rahmen des Flurförderzeugs hinein begrenzt. Wird ein Batterieblock in das Flurförderzeug eingeschoben, ist dies nur bis zu dem zweiten Halteanschlag möglich. Der Batterieblock steht dann noch um eine festgelegte Länge aus dem Fahrzeugrahmen hervor. Diese Länge hängt von der Position des zweiten Halteanschlags am Griffabschnitt des Entnahmehebels ab und lässt ausreichend Platz, bevorzugt 3 cm bis 15 cm, dass eine eine Wandung des Batterieblocks hintergreifende Hand nicht eingeklemmt werden kann.

Bevorzugt ist der erste Halteanschlag näher an der Achse angeordnet als der zweite Halteanschlag. Hierbei ist die Beweglichkeit des nicht durch die Batterieverriegelung arretierten Batterieblocks kleiner und der Überstand eines bis zum zweiten Halteanschlag eingeschobenen Batterieblocks aus dem Fahrzeugrahmen größer. Dies lässt sich auf einfache Weise einteilig, in einer einzelnen Konturierung des Entnahmehebels umsetzen.

In einer bevorzugten Ausgestaltung liegt ein oberer Anschlag des Entnahmehebels an einem weiteren Anschlag an, wenn der Entnahmehebel in eine Freigabeposition verstellt wird. Auf diese Weise kann der Entnahmehebel nur bis zu einer definierten Position verschwenkt werden. Der Entnahmehebel lässt sich nicht so weit verschwenken, dass der Hebelabschnitt über einen oberen Rand des Batterieblocks hinaus bewegt wird, so dass er diesen nicht mehr erfassen kann.

Bevorzugt ist der weitere Anschlag an einer Trägervorrichtung der Batterieverriegelung angebracht, wodurch er fahrzeugfest angeordnet ist und insbesondere einteilig mit der Trägervorrichtung verbunden sein kann.

In einer bevorzugten Ausgestaltung weist der Hebelabschnitt des Entnahmehebels eine bei der Entnahme an dem Batterieblock anliegende Hebelkontur auf, die in unterschiedlichen Positionen des Entnahmehebels unterschiedliche Hebelkräfte auf den Batterieblock überträgt. Bevorzugt ist die Hebelkontur des Hebelabschnitts derart gekrümmt, dass bei der Betätigung des Entnahmehebels von einer Ruheposition in eine Freigabeposition die Hebelkraft mit zunehmendem Ausschub des Batterieblocks abnimmt. So ist bei einer Entnahme des Batterieblocks die Hebelkraft zunächst besonders groß, um die nötige Losbrechkraft auszuüben. Bei weiterer Betätigung des Hebels nach Überwinden der Losbrechkraft wird der wirkende Hebelarm des Hebelabschnitts durch die gekrümmte Kontur länger; der Batterieblock kann weiter ausgeschoben werden.

Bevorzugt ist der Hebelabschnitt des Entnahmehebels so dimensioniert ist, dass bei der Betätigung des Entnahmehebels in eine Freigabeposition der Batterieblock so weit aus dem Rahmen des Flurförderzeugs ausgeschoben wird, dass der Batterieblock 3 cm bis 15 cm aus dem Rahmen heraussteht. Der Batterieblock kann nun leicht erfasst und vollständig herausgezogen werden.

Der Entnahmehebel kann bevorzugt mittels einer Rückholfeder in eine Ruheposition vorgespannt werden, wodurch die korrekte Positionierung des Entnahmehebels und insbesondere der Halteanschläge gewährleistet ist.

Bei einer Ausgestaltung der Erfindung weist die Batterieverriegelung zwei zusammenwirkende Hebel auf, wobei ein erster Hebel um eine fahrzeugfeste Achse gelagert ist und ein zweiter Hebel an dem ersten Hebel schwenkbar gelagert ist, derart, dass der zweite Hebel mindestens eine Wandfläche des Batterieblocks klemmend erfasst. Hierbei kann es sich insbesondere um eine Batterieverriegelung handeln, wie sie aus der eingangs genannten DE 10 2006 057 490 A1 bekannt ist.

Ein Ausführungsbeispiel der Erfindung wird nachfolgend anhand von Zeichnungen näher erläutert.
- Fig. 1: zeigt perspektivisch eine Verriegelungsvorrichtung nach der Erfindung in einer Verriegelungsstellung.
- Fig. 2: zeigt in einer Seitenansicht die Verriegelungsvorrichtung nach Fig. 1 mit einem Batterieblock in einem angedeuteten Rahmen und einem Ent- nahmehebel in einer Ruheposition.
- Fig. 3: zeigt die Verriegelungsvorrichtung nach Fig. 2 mit geöffneter Batterie- verriegelung.
- Fig. 4: zeigt die Verriegelungsvorrichtung nach Fig. 3 mit dem Entnahmehebel in einer ersten Position.
- Fig. 5: zeigt die Verriegelungsvorrichtung nach Fig. 4 mit dem Entnahmehebel in einer Freigabeposition.
- Fig. 6: zeigt die Verriegelungsvorrichtung nach Fig. 3 mit einem teilweise ein- geschobenen Batterieblock.
- Fig. 7: zeigt die Verriegelungsvorrichtung nach Fig. 6 mit einem nahezu voll- ständig eingeschobenen Batterieblock.

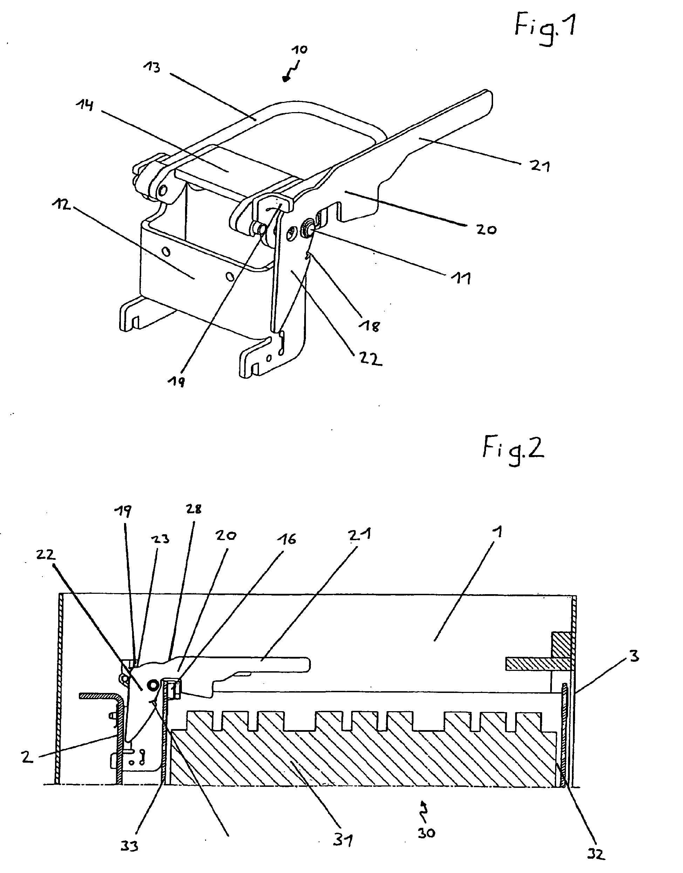

In Figur 1 ist eine Verriegelungsvorrichtung dargestellt, die eine Batterieverriegelung 10 und einen Entnahmehebel 20 umfasst. Die Batterieverriegelung 10 weist eine Trägervorrichtung 12 auf, an die ein erster bügelartiger Hebel 13 angelenkt ist. Ein zweiter Hebel 14 ist mit Hilfe eines Lagerbolzens an dem ersten Hebel 13 angelenkt.

Der Entnahmehebel 20 ist mittels eines mit der Trägervorrichtung 12 verbundenen Bolzens um eine Achse 11 schwenkbar gelagert. Der Entnahmehebel 20 weist einen ersten Hebelarm auf, der einen Griffabschnitt 21 bildet, sowie einen etwa rechtwinklig zum ersten Hebelarm abgewinkelten zweiten Hebelarm, der einen Hebelabschnitt 22 bildet. In einer Ruheposition des Entnahmehebels verläuft der Griffabschnitt 21 parallel zu dem ersten Hebel 13 der Batterieverriegelung 10, wenn diese sich in einer Verriegelungsstellung befindet. Ein Ruheanschlag 23, der an einem Ende des Hebelabschnitts 22 nahe der Achse 11 gebildet ist, liegt in der Ruheposition des Entnahmehebels 20 an einem Gegenanschlag 19 an, welcher von einem abgewinkelten Teil der Trägervorrichtung gebildet ist. Die Bewegung des Entnahmehebels 20 ist somit begrenzt, so dass gemäß Fig. 2 der Griffabschnitt 21 aus der waagerechten Ruheposition nicht weiter in Richtung Batterieblock beweglich ist. Eine Rückholfeder 18 spannt den Entnahmehebel 20 in diese Ruheposition vor.

Fig. 2 zeigt einen Batterieblock 30, der in einem nur angedeutet dargestellten Rahmen 1 eines Flurförderzeugs angeordnet ist. Der Batterieblock 30 umfasst eine Batterie 31, die in einem Batterietrog 32 untergebracht ist. Die erfindungsgemäße Verriegelungsvorrichtung ist an einem fest mit dem Rahmen 1 verbundenen Halteblech 2 montiert. Der Batterieblock 30 ist vollständig in den Rahmen 1 des Flurförderzeugs eingeschoben und wird von der Batterieverriegelung 10 fest an seinem Platz gehalten. Der zweite Hebel 14 der Batterieverriegelung 10 ist an einem abgewinkelten Abschnitt mit einem Puffer 16 aus Kunststoff versehen und hintergreift eine Wandfläche 33 des Batterietrogs 32, wobei diese zwischen dem zweiten Hebel 14 und der Trägervorrichtung 12 eingeklemmt ist. Erster und zweiter Hebel 13, 14 wirken wie ein Kniehebelverschluss zusammen. In der Verriegelungsposition, wie sie in den Figuren 1 und 2 dargestellt ist, wirkt der Puffer 16 gegen die Wandfläche 33 und erzeugt eine Vorspannung bei Überschreiten des Totpunktes der beiden Hebel 13, 14 der Batterieverriegelung 10, wenn der erste Hebel 13 von einer angehobenen in die in den Figuren 1 und 2 dargestellte horizontale Verriegelungsposition verschwenkt wird. Bekanntlich stehen Wandabschnitte des Batterieblocks 12 nach oben über die aufgenommene Batterie über. Der Puffer 16 greifen daher auf die Innenseite der Stirnwand 13 oben an, um gemäß Figuren 1 und 2 den Batterieblock 12 in dieser Position gegen die Trägervorrichtung 12 zu halten und zu verriegeln.

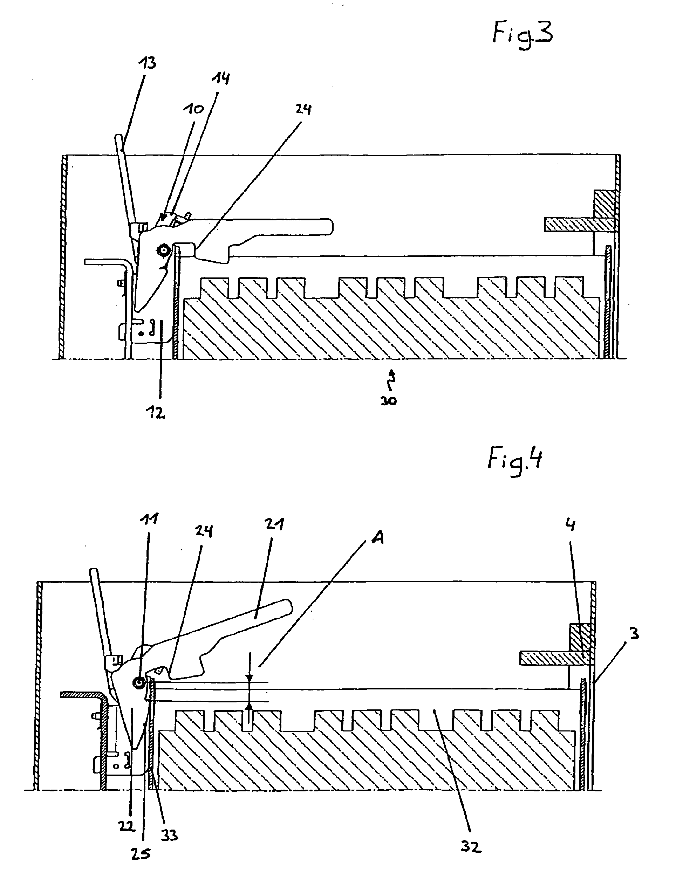

Wird der erste Hebel 13 der Batterieverriegelung 10 zur Entnahme des Batterieblocks 30 in die Freigabeposition verschwenkt, verschwenkt sich auch der zweite Hebel 14, und der Puffer 16 wird über den Rand der Wandfläche 33 des Batterieblocks 30 geschwenkt. In den Figuren 3 bis 7 ist die Batterieverriegelung 10 in der Freigabeposition dargestellt.

Der Entnahmehebel 20 liegt in seiner Ruheposition durch die Rückholfeder 18 vorgespannt mit dem Ruheanschlag 23 an dem Gegenanschlag 19 der Trägervorrichtung 12 an. Der Schwerpunkt des Entnahmehebels kann auch so gewählt sein, dass auf die Rückholfeder 18 verzichtet werden kann. Zur Entnahme des Batterieblocks 30 ist die Batterieverriegelung 10 entriegelt (Fig. 3). Ein erster Halteanschlag 24, der an dem Griffabschnitt 21 des Entnahmehebels 20 angeordnet ist und in den Batterietrog 32 hineinreicht, verhindert ein Herausrollen des Batterieblocks 30, falls das Flurförderzeug in einer abschüssigen Lage abgestellt sein sollte.

Nun wird der Entnahmehebel 20 gegen die Kraft der Rückholfeder 18 betätigt, wobei der Hebelabschnitt 21, wie in Fig. 4 gezeigt, mit der Wandfläche 33 des Batterieblocks 30 in Kontakt tritt. Gleichzeitig wird der erste Halteanschlag 24 aus dem Bereich des Batterietrogs 32 herausgeschwenkt. Der Hebelabschnitt 21 weist eine gekrümmte Hebelkontur 25 auf, wodurch bei einem ersten Kontakt des Hebelabschnitts 21 mit der Wandfläche 33 des Batterietrogs 32 zunächst eine kleine Hebellänge A für eine hohe Kraftverstärkung wirkt, mit der eine Losbrechkraft erleichtert aufgebracht werden kann.

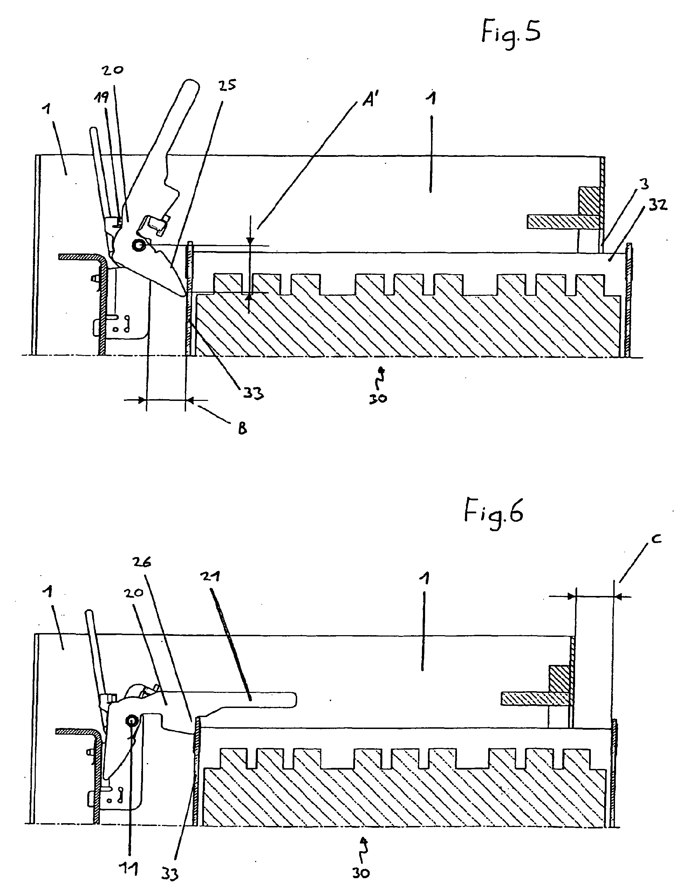

Der Batterieblock 30 kann durch eine Öffnung 3 des Rahmens 1 ein- und ausgeschoben werden. Eine tragende Struktur 4 des Rahmens oberhalb der Öffnung 3 soll ein unbeabsichtigtes Greifen des Batterietrogs 32 beim Ausschub verhindern. Bei weiterer Verschwenkung des Entnahmehebels 20 nach Fig. 5 drückt der Hebelabschnitt 22 durch die Hebelkontur 25 mit zunehmender Hebellänge gegen die Wandfläche 33 des Batterieblocks 30 und schiebt diesen aus seiner Anlageposition heraus. In einer Freigabeposition, d.h. bei maximaler Auslenkung und maximaler Hebellänge A' des Entnahmehebels 20 ist der Batterieblock um eine Strecke B aus dem Rahmen 1 des Flurförderzeugs ausgeschoben, dass ein der Verriegelungsvorrichtung gegenüberliegendes Ende des Batterieblocks 30 so weit durch die Öffnung 3 herausgeschoben ist, dass der Batterietrog 32 bequem zur vollständigen Entnahme beispielsweise durch den Fahrzeugführer hintergriffen werden kann. Die Freigabeposition des Entnahmehebels 20 ist durch das Anliegen eines oberen Anschlags 28, der an einem Ende des Griffabschnitts 21 nahe der Achse 11 gebildet ist, an dem Gegenanschlag 19 definiert.

Beim Einschieben eines Batterieblocks 30 gemäß Fig. 6 kann dieser zunächst nur so weit eingeschoben werden, dass der Batterietrog 32 um eine Strecke C aus dem Rahmen 1 heraussteht. So ist das Verletzungsrisiko für die den Batterieblock einschiebende Person verringert. Die eingeschobene Wandfläche 33 des Batterieblocks 30 liegt dabei an einem zweiten Halteanschlag 26 des Entnahmehebels 20 an. Der zweite Halteanschlag 26 ist weiter von der Achse 11 entfernt an dem Griffabschnitt 21 angeordnet, als der erste Halteanschlag 24.

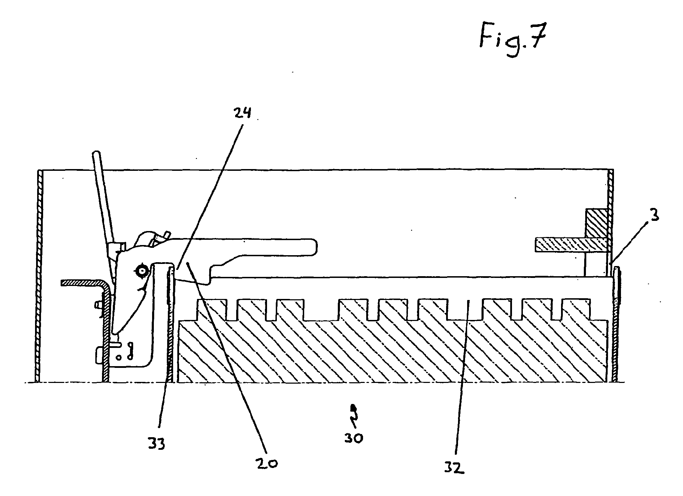

Um den Batterieblock 30 vollständig in den Rahmen 1 einzuschieben, muss der Entnahmehebel gegen die Kraft der Rückholfeder 18 angehoben werden, so dass die Wandfläche 33 unter dem zweiten Halteanschlag 26 hindurch geschoben werden kann. Hat die Wandfläche 33 auch den ersten Halteanschlag 24 passiert (Fig. 7), fällt der Entnahmehebel in die Ruheposition, wobei der erste Halteanschlag nun ein Zurückrollen des Batterieblocks verhindert. Ein Bediener hat nun auch in einer Schräglage des Flurförderzeugs beide Hände frei, um den Batterieblock 30 mittels der Batterieverriegelung 10 im Rahmen 1 des Flurförderzeugs zu sichern.

## Patentansprüche

1. Verriegelungsvorrichtung für einen Batterieblock (30) für ein Flurförderzeug mit einer Batterieverriegelung (10) zur lösbaren Verriegelung des Batterieblocks (30) in einem Rahmen (1) des Flurförderzeugs und einem separaten, um eine fahrzeugfeste Achse (11) gelagerten Entnahmehebel (20) zur Unterstützung einer Entnahme des Batterieblocks (30), **dadurch gekennzeichnet dass** der Entnahmehebel (20) einen durch einen ersten Hebelarm gebildeten Griffabschnitt (21) sowie einen durch einen zweiten Hebelarm gebildeten Hebelabschnitt (22) aufweist, der bei der Entnahme den Batterieblock (30) teilweise aus dem Rahmen heraus schiebt.

2. Verriegelungsvorrichtung nach Anspruch 1, **dadurch gekennzeichnet, dass** der Entnahmehebel (20) über die Achse (11) mit der Batterieverriegelung (10) verbunden ist.

3. Verriegelungsvorrichtung nach Anspruch 2, **dadurch gekennzeichnet, dass** die Batterieverriegelung (10) mindestens einen Hebel (13, 14) aufweist und die Achse (11) eine Verlängerung einer Achse der Batterieverriegelung (10) ist.

4. Verriegelungsvorrichtung nach einem der Ansprüche 1 bis 3, **dadurch gekennzeichnet, dass** der Griffabschnitt (21) des Entnahmehebels (20) einen ersten Halteanschlag (24) aufweist, der in einer Ruheposition des Entnahmehebels (20) die Beweglichkeit des nicht durch die Batterieverriegelung (10) verriegelten Batterieblocks (30) aus dem Rahmen (1) des Flurförderzeugs heraus begrenzt.

5. Verriegelungsvorrichtung nach einem der Ansprüche 1 bis 4, **dadurch gekennzeichnet, dass** der Griffabschnitt (21) des Entnahmehebels (20) einen zweiten Halteanschlag (26) aufweist, der in einer Ruheposition des Entnahmehebels (20) den Einschub des Batterieblocks (30) in den Rahmen (1) des Flurförderzeugs hinein begrenzt.

6. Verriegelungsvorrichtung nach Anspruch 4 und 5, **dadurch gekennzeichnet, dass** der erste Halteanschlag (24) näher an der Achse (11) angeordnet ist als der zweite Halteanschlag (26).

7. Verriegelungsvorrichtung nach einem der Ansprüche 1 bis 6, **dadurch gekennzeichnet, dass** ein oberer Anschlag (28) des Entnahmehebels (20) an einem Gegenanschlag (19) anliegt, wenn der Entnahmehebel (20) in eine Freigabeposition verstellt wird.

8. Verriegelungsvorrichtung nach Anspruch 7, **dadurch gekennzeichnet, dass** der Gegenanschlag (19) an einer Trägervorrichtung (12) der Batterieverriegelung (10) angeordnet ist.

9. Verriegelungsvorrichtung nach einem der Ansprüche 1 bis 8, **dadurch gekennzeichnet, dass** der Hebelabschnitt (22) des Entnahmehebels (20) eine bei der Entnahme an dem Batterieblock anliegende Hebelkontur (25) aufweist, die in unterschiedlichen Positionen des Entnahmehebels (20) unterschiedliche Hebelkräfte auf den Batterieblock überträgt.

10. Verriegelungsvorrichtung nach Anspruch 9, **dadurch gekennzeichnet, dass** die Hebelkontur (25) des Hebelabschnitts (22) gekrümmt ist, derart, dass bei der Betätigung des Entnahmehebels (20) von einer Ruheposition in eine Freigabeposition die Hebelkraft mit zunehmendem Ausschub des Batterieblocks (30) abnimmt.

11. Verriegelungsvorrichtung nach einem der Ansprüche 1 bis 10, **dadurch gekennzeichnet, dass** der Hebelabschnitt (22) des Entnahmehebels (20) so dimensioniert ist, dass bei der Betätigung des Entnahmehebels (20) in eine Freigabeposition der Batterieblock (30) so weit aus dem Rahmen (1) des Flurförderzeugs ausgeschoben wird, dass der Batterieblock (30) 3 cm bis 15 cm aus dem Rahmen (1) heraussteht.

12. Verriegelungsvorrichtung nach einem der Ansprüche 1 bis 11, **dadurch gekennzeichnet, dass** der Entnahmehebel (20) mittels einer Rückholfeder (18) in eine Ruheposition vorspannt.

13. Verriegelungsvorrichtung nach einem der Ansprüche 1 bis 12, **dadurch gekennzeichnet, dass** Batterieverriegelung (10) zwei zusammenwirkende Hebel (13, 14) aufweist, wobei ein erster Hebel (13) um eine fahrzeugfeste Achse gelagert ist und ein zweiter Hebel (14) an dem ersten Hebel (13) schwenkbar gelagert ist, derart, dass der zweite Hebel (14) mindestens eine Wandfläche (33) des Batterieblocks (30) klemmend erfasst.

## Claims

1. A locking device for a battery block (30) for an industrial truck, with a battery lock (10) for detachably locking the battery block (30) in a frame (1) of the industrial truck, and with a separate removing lever (20), bearing mounted around a vehicle-fixed axis (11), for aiding in the removal of the battery block (30), **characterised in that** the removing lever (20) has a grip portion (21) formed through a first lever arm, and a lever portion (22) formed by a second lever arm and pushing the battery block (30) partially out of the frame in the removal thereof.

2. The locking device according to claim 1, **characterised in that** the removing lever (20) is connected to the battery lock (10) via the axis (11).

3. The locking device according to claim 2, **characterised in that** the battery lock (1) has at least one lever (13, 14) and that the axis (11) is a lengthening of an axis of the battery lock (10).

4. A locking device according to any one of claims 1 to 3, **characterised in that** the grip portion (21) of the removing lever (20) has a first retaining stop (24), which limits the mobility of the battery block (30) not locked by the battery lock (10) out of the frame (1) of the industrial truck in a rest position of the removing lever (20).

5. A locking device according to any one of claims 1 to 4, **characterised in that** the grip portion (21) of the removing lever (20) has a second retaining stop (26), which limits the plug-in range of the battery block (30) into the frame (1) of the industrial truck when the removing lever (20) is in its rest position.

6. A locking device according to claim 4 and 5, **characterised in that** the first retaining stop (24) is disposed nearer to the axis (11) than the second retaining stop (26).

7. A locking device according to any one of claims 1 to 3, **characterised in that** an upper stop (28) of the removing lever (20) bears against a counter-stop (19) when the removing lever (20) is switched into a releasing position.

8. The locking device according to claim 7, **characterised in that** the counter-stop (19) is disposed on a carrier device (12) of the battery lock (10).

9. A locking device according to any one of claims 1 to 3, **characterised in that** the lever portion (22) of the removing lever (20) has a lever contour (25) that bears closely against the battery block in the removal and transfers different lever forces to the battery block in different positions of the removing lever (20).

10. The locking device according to claim 9, **characterised in that** the lever contour (25) of the lever portion (22) is bent such that when the removing lever (20) is actuated to move from a rest position into a releasing position, the lever force decreases with increasing plug-out of the battery block (30).

11. A locking device according to any one of claims 1 to 10, **characterised in that** the lever portion (22) of the removing lever (20) is dimensioned such that upon actuation of the removing lever (20) to move it into a releasing position, the battery block is thrust out of the frame (1) of the industrial truck to an extent such that the battery block (30) stands out of the frame (1) for 3 cm up to 15 cm.

12. A locking device according to any one of claims 1 to 11, **characterised in that** the removing lever (20) is preloaded into a rest position by way of a recuperating spring (18).

13. A locking device according to any one of claims 1 to 12, **characterised in that** the battery lock (10) has two co-operating levers (13, 14), wherein a first lever (13) is mounted around a vehicle-fixed axis, and a second lever (14) is swivel mounted on the first lever (13), such that the second lever (14) engages at least one wall surface (33) of the battery block (30) in a clamping manner.

## Revendications

1. Dispositif de verrouillage pour un bloc de batterie (30) d'un chariot de manutention, avec un verrouillage de batterie (10) pour le verrouillage du bloc de batterie (30) dans un cadre de châssis (1) du chariot de manutention de façon amovible, et avec un levier de reprise (20) séparé, monté autour d'un axe (11) stationnaire par rapport au véhicule, pour aider dans la reprise du bloc de batterie (30), **caractérisé en ce que** le levier de reprise (20) a une partie de poignée (21) formée par un premier bras de levier, et une partie de levier (22) formée par un deuxième bras de levier et poussant le bloc de batterie (30) partiellement au-dehors du cadre de châssis dans la reprise.

2. Dispositif de verrouillage selon la revendication 1, **caractérisé en ce que** le levier de reprise (20) est connecté au verrouillage de batterie (10) via l'axe (11).

3. Dispositif de verrouillage selon la revendication 2, **caractérisé en ce que** le verrouillage de batterie (10) a au moins un levier (13, 14) et que l'axe (11) est une prolongation d'un axe du verrouillage de batterie (10).

4. Dispositif de verrouillage selon l'une quelconque des revendications 1 à 3, **caractérisé en ce que** la partie de poignée (21) du levier de reprise (20) a une première butée de retenue (24), qui limite la mobilité du bloc de batterie (30) non verrouillé par le verrouillage de batterie (10) vers le dehors du cadre de châssis (1) du chariot de manutention dans une position de repos du levier de reprise (20).

5. Dispositif de verrouillage selon l'une quelconque des revendications 1 à 4, **caractérisé en ce que** la partie de poignée (21) du levier de reprise (20) a une deuxième butée de retenue (26), qui limite le rayon d'insertion du bloc de batterie (30) au cadre de châssis (1) du chariot de manutention quand le levier de reprise (20) est dans sa position de repos.

6. Dispositif de verrouillage selon la revendication 4 et 5, **caractérisé en ce que** la première butée de retenue (24) est disposée plus proche à l'axe (11) que la deuxième butée de retenue (26).

7. Dispositif de verrouillage selon l'une quelconque des revendications 1 à 3, **caractérisé en ce que** une butée supérieure (28) du levier de reprise (20) porte bien contre une contre-butée (19) quand le levier de reprise (20) est mis en une position de déverrouillage.

8. Dispositif de verrouillage selon la revendication 7, **caractérisé en ce que** la contre-butée (19) est disposée dans un dispositif porteur (12) du verrouillage de batterie (10).

9. Dispositif de verrouillage selon l'une quelconque des revendications 1 à 3, **caractérisé en ce que** la partie de levier (22) du levier de reprise (20) a un contour de levier (25) qui porte bien contre le bloc de batterie dans la reprise et qui transfert des forces de levier différentes au bloc de batterie dans des positions différentes du levier de reprise (20).

10. Dispositif de verrouillage selon la revendication 9, **caractérisé en ce que** le contour de levier (25) de la partie de levier (22) est courbé de sorte que la force de levier diminue avec poussée vers dehors croissante du bloc de batterie (30) quand le levier de reprise (20) est mis d'une position de repos vers une position de déverrouillage.

11. Dispositif de verrouillage selon l'une quelconque des revendications 1 à 10, **caractérisé en ce que** la partie de levier (22) du levier de reprise (20) est dimensionnée tellement que quand le levier de reprise (20) est mis en une position de déverrouillage, le bloc de batterie est poussé en dehors du cadre de châssis (1) du chariot de manutention si loin que le bloc de batterie (30) projette du cadre de châssis (1) pour 3 cm jusqu'à 15 cm.

12. Dispositif de verrouillage selon l'une quelconque des revendications 1 à 11, **caractérisé en ce que** le levier de reprise (20) se précontraint en une position de repos au moyen d'un ressort de rappel (18).

13. Dispositif de verrouillage selon l'une quelconque des revendications 1 à 12, **caractérisé en ce que** le verrouillage de batterie (10) a deux leviers co-opérants (13, 14), un premier levier (13) étant monté autour d'un axe stationnaire par rapport au véhicule et un deuxième levier (14) étant monté de façon pivotante sur le premier levier (13), de sorte qu'il saisit de façon serrante au moins une surface de paroi (33) du bloc de batterie (30).
